# EUROPEAN PATENT APPLICATION

(11) **EP 1 482 298 A1**
(43) Date of publication of application: **01.12.2004**
(21) Application number: 03405378.5
(22) Date of filing: 26.05.2003
(51) Int. Cl.: G01N 21/25, G01J 3/02, G01N 21/77

(54) **Arrangement for continuous determination of a substance**

(71) Applicant: Sensorix, 8005 Zürich (CH)
(72) Inventor: Rothmaier, Markus, 8037 Zürich (CH); Busse-Grawitz, Max Erick, 6064 Kerns (CH); Schmidiger, Thomas, 6072 Sachseln (CH)
(74) Representative: Roshardt, Werner Alfred, Dipl.-Phys.

(57) **Abstract**

The invention relates to an arrangement for continuous determination of a substance comprising a chemically reacting sensor element (21) arranged in or adjacent to a limiting wall of a volume (22) containing the substance, where in a housing (2) of a modular device (1) optical elements to read the sensor element (21) are arranged, comprising at least one light source (35) illuminating the sensor element (21) and at least one sample detector (29) detecting the light scattered by the sensor element (21), and where a front side of the housing (2) comprises a coupling for the sensor element (21) is arranged, so that the sensor element (21) may be interchangeably and modularly coupled to the front side of the housing (2). A glass body (24) is arranged adjacent to the coupling for direct contact with the sensor element (21) and separate conduits (34, 31) for the illuminating and for the scattered light are arranged rearward of the glass body (24). The modular device (1) allows for easily interchanging the modular sensor element (21) and provides an optical connection between the sensor element (21) and the detector (29) which is steady and allows for high quality measurements.

## Description

### Technical Field

The invention relates to an arrangement for continuous determination of a substance comprising a chemically reacting sensor element arranged in or adjacent to a limiting wall of a volume containing the substance, where in a housing of a modular device optical elements to read the sensor element are arranged, comprising at least one light source illuminating the sensor element and at least one sample detector detecting the light scattered by the sensor element, and where a front side of the housing comprises a coupling for the sensor element is arranged, so that the sensor element may be interchangeably and modularly coupled to the front side of the housing.

### Background Art

In the framework of modern production processes, e. g. for quality control of a manufactured product, it is crucial to continuously determining substances comprised by the product. This is done by performing a plurality of either continuous or intermittent measurements of a sample of the product supplied continuously or periodically.

Conventionally, mostly flow injection analysis (FIA) systems have been used for continuously determining substances. These systems comprise elaborate devices, in particular pumps and valves, for supplying and discharging sample fluids and reagents, where necessary. The determination has been effected by analytical processes employing the reagents, by bio-sensors or chemical sensors (e. g. ion-selective electrodes).

In particular, the determination of the concentration of a certain substance by measuring the colour change of an indicating substance or absorbent reacting with the substance is described e. g. in the US patents No. 3,754,867 (Bjorksten Research Laboratories) and No. 4,003,707 (Max-Planck-Gesellschaft).

The WO 98/30892 (U. Spichiger-Keller, J. Müller) discloses a sensor system for the continuous determination of a substance that is modular, such that a plurality of different modules having different types of sensors may be employed. This allows for simultaneous determination of different parameters if necessary using different measuring techniques. The sensor elements where all the chemical reactions take place are interchangeable structures. They comprise selective layers which allow for continuously measuring a substance flowing through, without employing reagents. Among other things, sensor elements may be employed that are read optically. In particular such elements may comprise a waveguide on which the selective layers are deposited. Different quantities may be measured, such as absorption/absorbance in ATR (attenuated total reflection) mode, the change of the refraction index, the optical extension, phase shifts, reflection, the decay time of luminescence or the derivative of the luminescence emission. The light energy needed may be provided from the outside of the module by an optical fibre or it may be generated directly in the module, e. g. by a LED. The optical detector may as well be integrated into the module. The optical sensor element shows the form of a die and is clamped in between the head portion and a base portion and directly contacts a conduit for the samples to be analysed. The head portion is mounted to the base portion by screws.
However, for interchanging the sensor element or the die comprising the selective layers, the screws connecting the head portion and the base portion have to be unscrewed, this being an elaborate and cumbersome process. Further, WO 98/30892 does not disclose any details concerning the attachment of the die in the module or its optical connection to the detector.

### Summary of the invention

It is therefore the object of the invention to create an arrangement for continuous determination of a substance pertaining to the technical field initially mentioned, which allows for easily interchanging the modular sensor element and which provides an optical connection between the sensor element and the detector which is steady and allows for high quality measurements.

The solution according to the invention is specified by the features of claim 1. According to the invention a glass body is arranged adjacent to the coupling for direct contact with the sensor element and separate conduits for the illuminating and for the scattered light are arranged rearward of the glass body.

The transparency of the glass body allows for the illumination of the sensor element as well as for the transmission of the scattered light. At the same time the sensor element is steadily supported in its optically relevant region, thus inhibiting inflections of the element that would lead to optical errors and therefore affect the measured results. Furthermore, the mechanical stress is reduced. The glass body defines a fixed distance between the light source and the sensor element as well as between the sensor element and the sample detector. It further acts as a sealing, reliably secluding the inside of the housing against dust or fluids from the outside, especially during replacement of the sensor element. The interchangeabilty of the sensor element is improved as it is simply coupled to the plain surface of the glass body arranged at the front side of the housing. Finally, the glass body is durable and its front surface is easy to clean. In principle, the glass body may be constituted by usual glass having a low refraction index.

The separate conduits allow for a different optical processing of the illuminating and the scattered light. At the same time, by screening the two optical paths from each other, interference is minimised.

Preferably, the optical elements are placed in a scattering light detection arrangement, i. e. the sample detector is arranged such that it does not substantially register light coming from the light source that is directly reflected at the transition surface to the sensor element or at the backface of the sensor element. The sample detector is e. g. arranged in an angle relative to the main surface of the sensor element which is substantially different from the angle of incidence of the light illuminating the sensor element. The separate conduits for the illuminating and for the scattered light improve the scattered light arrangement insofar as light not scattered by the sensor element arriving at the sample detector is minimised. These measures lead to a signal-to-noise ratio that is substantially improved compared to an arrangement where the directly reflected light is detected as well, together with the diffuse scattered light. Therefore, the precision of the measurements is enhanced. Additionally, measuring optical effects in the sensor element leading to diffuse light emission, such as fluorescence, phosphorescence or chemoluminescence is rendered possible.

Advantageously, the conduit for the illuminating light is inclined with respect to a main surface of the sensor element. The conduit confines the transmission of the light eradiated by the light source such that possibly only the sensor element is illuminated. This minimises interfering and uncontrolled reflections and correspondingly reduces the respective noise at the sample detector. A conduit that is inclined separates the path of the directly reflected light from the path of the illuminating light and allows for detection of the scattered light along an axis perpendicular to the surface of the sensor element, thereby simplifying the arrangement of optics such as lenses or masks.

Alternatively, a light source having a strong directivity may be used to illuminate the sensor element. Supportingly, the interior of the housing or portions thereof may be furnished such as to eliminate reflections, e.g. by optically black anodisation. Further, the arrangement of the light source and of the sample detector may be chosen such that the light source is arranged perpendicular to the sensor element and that the sample detector is arranged inclined to the element.

Preferentially, the glass body is movably fitted to the housing and a spring exerts pressure onto the glass body such that it is pressed against the sensor element. Moving the glass body allows for adapting the device to sensor elements having different thicknesses. Thus, changing the sensor element is facilitated because the thickness of the sensor element does not have to be taken into account. The pressure of the spring leads to the sensor element bearing on the front side of the glass body in a planar way. A spiral spring exerting pressure onto the back side of the glass body or onto a flange in the front portion of the glass body is suitable as well as e. g. a leaf spring or an elastic ring of a synthetic material.

Instead of by using a spring the arrangement of the glass body in the housing may be adjusted and fixed by other means, e. g. by a screw. If the sensor elements used with a certain device all have the same thickness the glass body may be fixed.

Advantageously, the at least one sample detector, the at least one light source and at least one reference detector are arranged in a cavity of the housing in such a way that a first portion of the light radiated by the light source into a predetermined half-space arrives at the reference detector without optics, i. e. without passing lenses, slits or masks etc., particularly by being scattered at a wall of the cavity, and that a second portion arrives directly at the sensor element. The reference detector allows for a systematic consideration of those effects that result from discrepancies of the illumination of the sensor element. Such discrepancies may be caused by ageing of the light sources, by systematic fluctuations of the control of the light sources or after replacing a light source.

Furthermore, the illumination may be accommodated to the sensor element used or to the substance to be detected without having to calibrate the whole device for the new choice of illumination.

Because solely diffuse scattered light is detected at both the sample as well as the reference detector, the intensity as well as the noise quality and noise level of the light detected at the two detectors are very similar. If the reference detector is similar or even identical to the sample detector, the analysis of the signals is facilitated and improved because the signals obtained by the detectors may be directly compared and correlated. Arranging both the reference detector as well as the sample detector in the same housing, it may further be assumed that the temperature of the sensors is substantially equal.

By not having to provide optics in the illumination path the build-up of the device is simplified. The intensity of the reference light may be adapted to the intensity of the sample light by furnishing a portion of the inside of the housing responsible for a substantial part of scattering of light from the light source to the reference detector by a bright, in particular white colour.

Preferentially, the light source is arranged such that the sensor element is directly illuminated by incident light and the optic is arranged in front of the sample detector. By omitting any optics (mirrors, masks or lenses) between the light source and the sensor element losses due to absorption and reflection are minimised and the construction of the device is simplified. The optic in front of the sample detector allows for an enhancement of the intensity of the scattered light by collecting light from a larger region of the sensor element on the active surface of the detector. Enhancing the intensity of the measured light is especially important if the optical elements are placed in a scattered light detection arrangement. Furthermore, if the form of the relevant area of the sensor is different from the form of the active surface of the detector, masks may be employed in front of the sample detector to ensure that only the relevant area is mapped to the detector. This reduces noise due to marginal areas of the sensor element.

Depending on the arrangement of the device, namely if the light source used is itself not able to illuminate the relevant area of the sensor element - or if the light source's cone of light is too wide such that a large fraction of light energy would be lost, supportingly an optic may be provided between the light source and the sensor element, namely a concave or convex lens.

Preferably, the sensor element comprises a transparent carrier element having a sensor layer. The transparency of the carrier element allows for unhindered transmission of the illuminating light to the actual sensor layer and again of the scattered light to be collected by the sample detector. The carrier element serves to mechanically stabilise the sensor layer. Preferably, it is bending resistant and may be composed of PET (poly(ethylene terephthalate)), PMMA (poly(methyl methacrylate)), polycarbonate (PC) or glass. Additionally, the carrier element may accomplish a filtering function, e. g. by filtering out ultraviolet rays that could lead to bleaching of the sensor layer. To achieve this, a UV absorber substance may be added to the material of the carrier element. The thickness of the carrier element amounts to about 0.1-4 mm.

The sensor layer comprises one or several indicating substances reacting with the substance to be determined, such that they change colour. Therefore, the absorption and reflection of the sensor layer is changed corresponding to the concentration of the substance. The indicating substances may be incorporated in a polymeric matrix. The thickness of the layer comprising the indicating substances as well as its composition is adapted to the basic absorption desired as well as to the substances to be determined and their expected concentration. Typically, it amounts to about 1-20 µm.

Alternatively, the carrier element as well as the sensor layer may be combined in a single layer effecting both functions.

The sample detector performs colorimetric and/or densitometric measurements. The quantities measured by the detector are the reflection at certain wavelengths as well as the changing of the reflection in time, where reflection is defined as the ratio of the reflected light power to the irradiated light power at a given wavelength. Normally, only relative quantities will be measured, i. e. ratios of the reflection occurring with a certain concentration of the substance to be determined to the reflection occurring in the absence of any substances, or to any other reference level. Therefore, absolute measurements requiring cumbersome calibration are avoided.

Preferably, a membrane is separating the sensor layer from the substance to be determined. The membrane performs several functions. Firstly, it may serve as a filter. Depending on its surface structure which may be hydrophilic or hydrophobic and which may show different levels of porosity different kinds of particles may pass through the membrane and reach the sensor layer. It may as well serve to separate volatile from non-volatile constituents. Furthermore, it may be a diffusion barrier, thus reducing the concentration of the substance supplied. This is useful if highly concentrated substances are to be determined. The membrane may e.g. be constituted by a layer of about 100 µm of PTFE (Teflon). Such a layer is permeable for volatile substances to be determined and due to its white colour it is reflecting the illuminating light back through the sensor layer. Alternatively, the layer may e. g. be constituted by polycarbonate, polyethylene or polypropylene with a microfine perforation.

Another function of the membrane is to hold back the indicating substances in the sensor layer, thereby avoiding washing out of the indicating substances. Further, the membrane serves as a mechanical protection of the sensor layer against damages effected by the mechanical contact with the feeding of the substance to be determined. Finally, the membrane is a sealing of the sample conduit in the region of its opening vis-à-vis the sensor element.

Alternatively, mainly if non-volatile substances such as sodium (Na) shall be determined that cannot pass a membrane and need direct contact with the sensor layer the indicating substances may be integrated in the sensor layer such that there is no risk of washing out and the membrane is omitted. However, a protecting layer may be provided, e. g. composed of silicone or soft PVC. In this case white pigments such as components comprising TiO₂ or SiO₂ may be dispersed in the protecting layer in order to increase the reflection of light back through the sensor layer.

Advantageously, the optical elements comprise a plurality of narrow-band light sources. This allows for use of the device in a larger field of applications, because the sensor elements may comprise different indicating substances having different absorption spectra. Using narrow-band light sources the irradiation intensities at different wave lengths are easier to control thereby damaging effects to the indicating substances caused by irradiation by certain wave lengths may be avoided. Furthermore, one of the light sources whose light is not absorbed by the indicating substances may be used as a reference. This allows for systematically taking into account the influence of the sensor element, its condition as well as the optical path from the light source to the sample detector during analysis of the measured data. The light intensities of the light sources used may be adapted to the sensor element employed as well as to the substance to be determined.

Suitable narrow-band light sources comprise LEDs having a bandwidth of 15-25 nm. They emit light having wavelenghts of about 400-950 nm. A preferred device comprises four such LEDs emitting visible light with wavelengths of between 500 nm and 900 nm. Measurements are performed subsequently, illuminating the sensor element by different wavelengths, thereby allowing to perform all the measurements using a single sample detector which is sensitive over the whole spectrum considered.

Alternatively a single light source, e.g. a broad-band white LED may be used, complemented by additional filters, e. g. dielectric filters, or by a detector capable of measuring not only total light intensity but a complete spectrum and having a high resolution, say of 10 nm or better. A single narrow-band light source may be employed if always the same indicating substance is used. Finally, the use of a plurality of broad-band light sources their spectra having a certain overlap allows for covering a broad region of the spectrum without any gaps.

To minimise the thermic effects of the light sources they may be arranged adjacent to the housing, thus allowing for effective heat transport. Alternatively, the light sources may be arranged outside the housing and light is transmitted into the housing by optical fibres.

Preferably, the sensor element is coupled to the housing by a mechanical coupling ring having an axis parallel to a principal axis of the sample detector. The coupling ring protects the sensor element from outside light, thereby reducing corresponding noise. Furthermore, this kind of coupling allows for an easy interchange of the sensor element. The ring may be screwed onto the front part of the housing or the housing may comprise a bayonet mount for even faster mounting and unmounting of the sensor element. It is preferable if the sensor element, namely its delicate outer layers, are linearly guided such that scratches are avoided during attachment of the sensor element.

A modular device for continuous determination of a substance comprises a contact area for a sensor element, arranged on a front side of a housing and in the housing optical elements comprising at least one light source and at least one sample detector. The contact area is constituted by a front surface of a glass body and separate conduits are arranged rearward of the glass body for guiding illuminating light from the light source to the glass body and for guiding light scattered by the sensor element from the glass body to the sample detector. Due to the transparency of the glass body the illuminating as well as the scattered light is transmitted unhamperedly between the conduits and the sensor element. The device is suited for use in the arrangement described above.

Other advantageous embodiments and combinations of features come out from the detailed description below and the totality of the claims.

### Brief description of the drawings

The drawings used to explain the embodiments show:
- Fig. 1: The exterior view of an arrangement according to the invention;
- Fig. 2: a cross-sectional view of the arrangement along the plane of the principal optical path;
- Fig. 3: a cross-sectional view of the arrangement in a vertical plane perpendicular to the principal optical path;
- Fig. 4: the arrangement installed in a measuring system;
- Fig. 5: a schematic representation of the set-up of the inventive arrangement;
- Fig. 6: a cross-sectional view of a sensor element.

In the figures, the same components are given the same reference symbols.

### Preferred embodiments

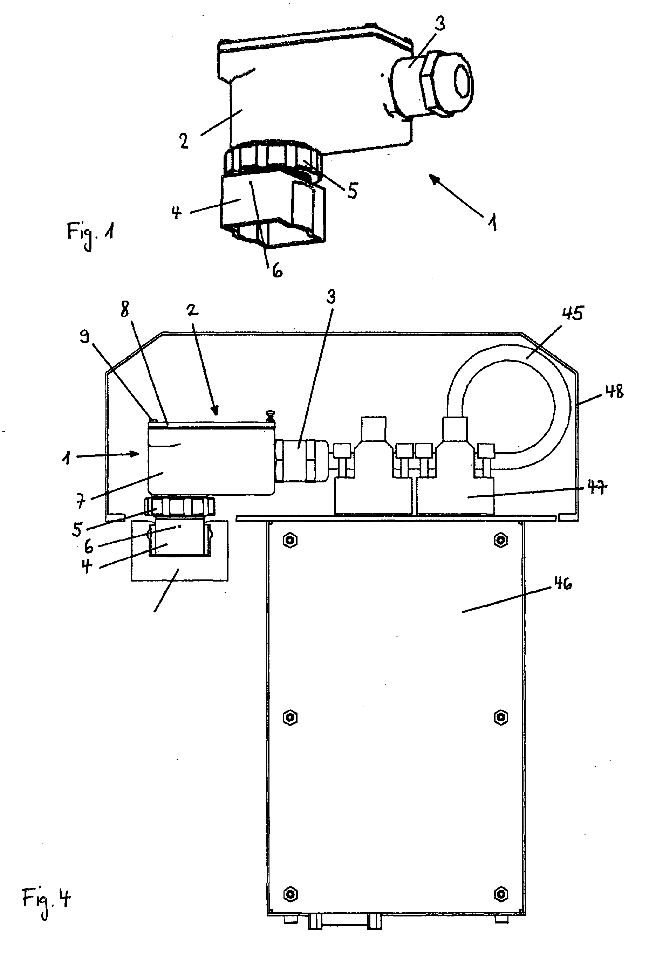

Figure 1 shows the exterior view of an arrangement according to the invention. The modular device 1 is L-shaped and includes a housing 2 of a substantially cubic form, a cable duct 3 having a circular cross-section arranged on one of the side faces of housing 2. On the adjacent base of the housing 2 a disposable flow-through cell 4 comprising the conduit for the samples to be analysed is coupled to the housing 2 by retainer 5. The cell 4 has a substantially cubic form and shows an opening 6 in its front face, connected to the conduit for the sample fluid. The retainer 5 is substantially circular, featuring splines facilitating tightening and loosening of the retainer 5 by a user in the course of interchanging a sensor element arranged in between cell 4 and housing 2.

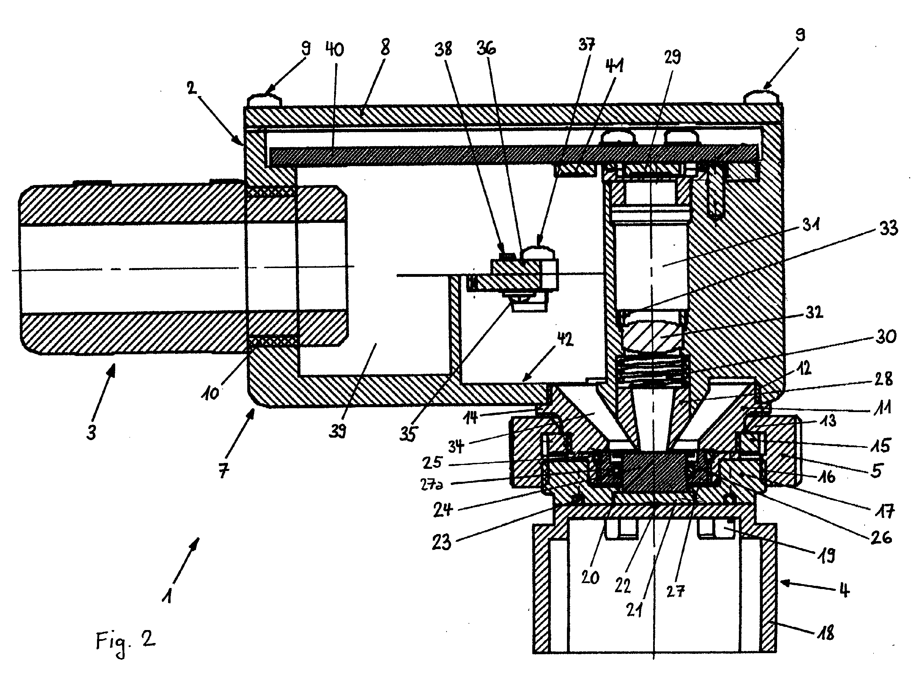

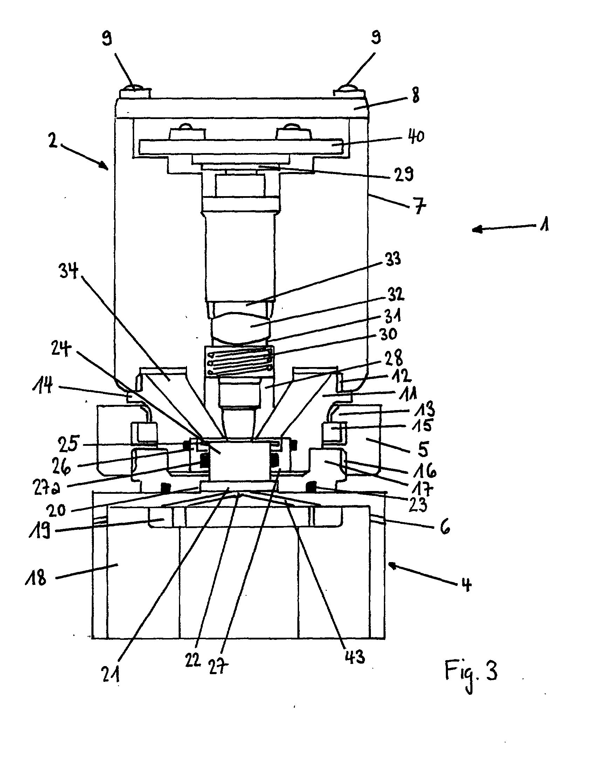

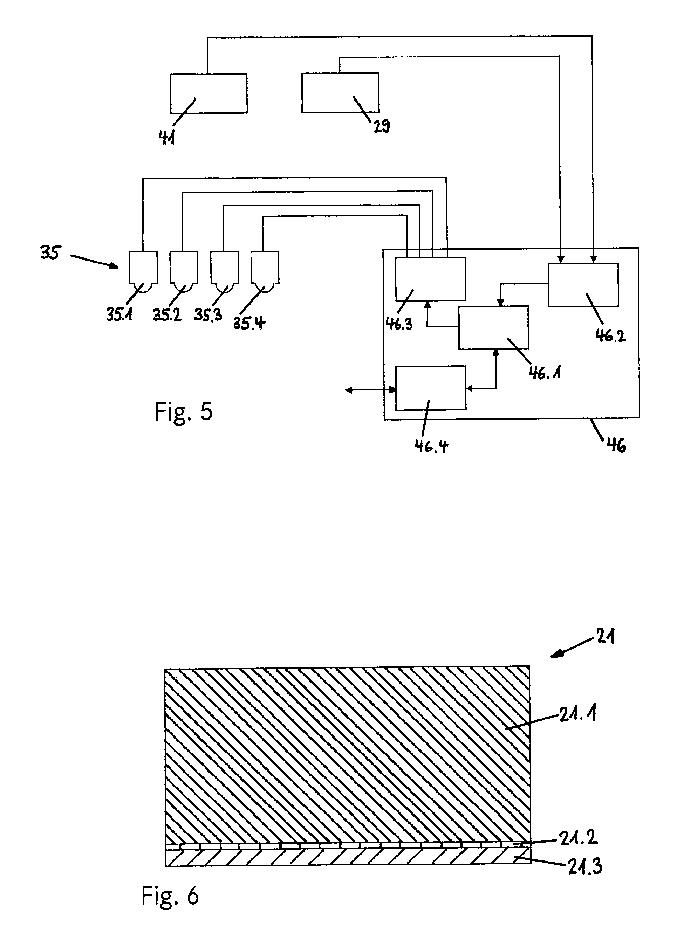

Figures 2 and 3 are cross-sectional views of the arrangement along the plane of the principal optical path (Figure 2) and in a vertical plane perpendicular to the principal optical path (Figure 3). The housing 2 comprises a main part 7 and a cover 8 fixed to the main part 7 by screws 9. The cable duct 3 is fixed to the main part 7 of the housing 2 by a thread 10. It accommodates cables to control the modular device, in particular the light sources, to provide it with electricity as well as data cables to feed back the results of the measurements to a central analysing device 43 (see Fig. 4). The cable duct 3 improves the optical shielding against outside light in that it further dislodges the opening for the cables from the main part 7 of the housing.

The housing 2 is substantially eliminating ambient light, serves for cooling of the elements contained and shields against electromagnetic radiation. It may be constituted e.g. of aluminium.

A connector part 11 is attached to the base of main part 7 by a thread 12. The retainer 5 comprises a flange 13 engaged between a corresponding protrusion 14 of the connector part 11 and a ring 15 fixed, e. g. screwed or glued to the connector part 11. Thereby, the retainer 5 is rotatably attached to the connector part 11. Along the lower part of the interior surface of retainer 5 a thread 16 is arranged co-operating with a respective thread arranged in an upper part 17 of the cell 4. The upper part 17 comprises a rail-like guide parallel to the axis of the upper part, co-operating with a respective groove on the contact surface of the connector part 11. Hence, by turning the retainer 5 the upper part 17 of the cell 4 will either be tightened to connector part 11 or loosened from connector part 11, whereby there is no rotational movement of the upper part 17 with respect to the cell 4.

A lower part 18 of cell 4 is fixed to the upper part 17 by bayonet mount 19. Therefore, the lower part 18 may be easily separated from the upper part 17 and easily remounted. In a matched recess 20 of the upper part 17 a sensor element 21 is disposed. It is firmly held in between the upper part 17 and the lower part 18, and it is fed by the sample fluid through an opening 22 of the duct 43 traversing the cell 4 (see Fig. 3). A gasket 23 is arranged between the lower part 18 and the upper part 17 protecting the sensor element 21 from outside light entering between the lower part 18 and the upper part 17 and sealing against loss of the sample fluid.

Directly adjacent to the sensor element 21 a glass body 24 having a circular cross-section is arranged. Its base connects to the sensor element 21 such that most of the surface of the sensor element 21 is supported by the glass body 24. Circumferentially attached to the glass body is a ring 25 guided in a recess 26 of a fixture 27 holding the glass body, the fixture being mounted to the connector part 11. The shape of the recess allows for a vertical movement of the glass body along a distance corresponding to the maximum thickness of a sensor element 21. The fixture 27 comprises a gasket 27a arranged adjacent to the glass body 24, in order to seal the interior of the housing 2 from the outside, which is particularly important for times when the cell 4 is removed from the housing 2.

A hollow cylinder 28 with a bevelled front end is arranged adjacent to the rear surface of the glass body 24 with its axis perpendicular to the surface. The hollow constitutes a first part of an optical channel for guiding light scattered by the sensor element 21 to a sample detector 29. At the same time, a spiral spring 30 fixed inside a channel 31 of the main part 7 of the housing 2 is disposed rearward of the hollow cylinder 28 and exerts pressure on the cylinder 28 such that it is pressed against the glass body 24. Thus, the glass body 24 is pressed against the sensor element 21. This leads to a firm bearing of the sensor element 21 on the front side of the glass body 24, thereby additionally sealing against loss of the sampling fluid At the same time, changing the sensor element 21 as well as employing sensor elements of different thicknesses is facilitated.

In the channel 31 a lens 32 is held by a lens holder 33 rearward of the hollow cylinder 28. The lens is of a convex shape and therefore collects the light scattered by the sensor element 21 and enhances the intensity of the light collected by the sample detector 29. The channel 31 is optically shielded against the rest of the inside of the housing 2 such that stray light other than light scattered by the sensor element 21 is barred. In front of the sample detector 29 a mask is disposed that maps the image of the active region of the sensor element 21 to the detector area of the sample detector 29. Light coming from a border area of the sensor element 21 is barred. For example, the opening 22 of the tubular duct 43 generally has an elliptical form. The detector area however is usually circular or rectangular. Therefore, the mask is shielding those parts of the detector area that do not correspond to the elliptical image of the active area of the sensor element 21 mapped onto the detector area by the lens 32.

The bevelled end of hollow cylinder 28 and a corresponding sloped portion at the inside of the connector part 11 define a substantially cone-shaped aperture 34 such that the sensor element 21 may be directly illuminated by light generated by LEDs 35 fixed to a holder 36 arranged in a cavity 39 of the housing 2 by a screw 37 as well as a bolt 38. The bevelled end of the hollow cylinder 28 reaching down to the rear surface of the glass body 24 separates the cone-shaped aperture 34 for the illuminating light from the optical channel 31 guiding the scattered light to be detected. Illuminating light reaching the rear surface of the glass body 24 is reflected such that it is directed against the outer surface of the hollow cylinder 28 where it is absorbed. Light reflected at the transition between the glass body 24 and the sensor element 21 is guided towards the opposite part of the aperture 34 where it is again absorbed. To enhance absorbance the surfaces defining the aperture 34 may be anodised optically black. To reduce reflection the rear surfaces of the glass body 24 as well as of the sensor element 21 may be suitably coated. By these measures it is ensured that a maximum of light reaches the active region of the sensor element 21 and that only light truly scattered by this region reaches the sample detector 29.

A printed circuit board (PCB) 40 is disposed behind the LEDs 35 and parallel to the cover 8. All the optical activities happen in the housing 2 in front of the PCB 40. Surface mounted on the PCB 40 are the sample detector 29 as well as a reference detector 41. The reference detector 41 is disposed in the cavity 37 of the housing 2 and detects stray illuminating light from the LEDs 35. To enhance the intensity of the detected stray light by the reference detector 41, a portion 42 of the inside of the housing 2 is furnished by a white colour such that the intensity at both detectors is of the same order of magnitude. The printed circuit board 40 further acts as a supporting optical shielding against light entering the housing 2 from the outside.

The signals provided by the detectors 29, 41 are weak and therefore susceptible to interference from electric or magnetic fields. The mounting of the detectors 29, 41 directly onto the PCB 40 reduces the danger of such interference by minimising the length of the connection between the detectors 29, 41 and further electronics (not displayed) arranged on the PCB 40 where the signals are pre-processed, e. g. amplified prior to further transmission. An interface adapting the signals to a predetermined standard may be as well disposed on the PCB 40.

If the sensor element 21 is to be changed because it has reached the end of its lifetime or if different measurements shall be performed, it is removed together with the disposable cell 4. To achieve this, preferably the retainer 5 is loosened such that the cell 4 may be pulled away vertically. A new cell 4 containing the desired sensor element is inserted into the connector part 11 and the retainer 5 is tightened again. Due to the strictly vertical movement of the cell 4 containing the sensor element 21 the danger of injuries to the contact surface of the sensor element 21 to the glass body 24 is minimised.

Alternatively, the sensor element 21 may be changed without replacement of the complete cell 4 by opening the bayonet mount 19 such that the sensor element 21 is laid open and may be replaced.

Figure 4 depicts the arrangement installed in a measuring system. A cable 45 leaves the cable duct 3 and is connected to a central analysis device 46 by a connector 47. The cell 4 is held in a guide channel 44 supplying the cell 4 (and if need be further cells) with the sample fluid through the opening 6. The upper part of the device comprising the housing 2 and the cable duct 3 as well as the cable 45 and the connector 47 are enclosed by a box 48 providing for protection against dust as well as for further protection against ambient light.

A single analysis system may comprise a plurality of modular devices performing different measurements using different sensor elements or even different, non-optical technologies for performing the measurements. Preferably they are arranged such that a single continuous channel supplies the sample fluid to several of the modular devices and that all the modules transmit their measurements to a central processing unit (e. g. a Personal Computer) of the analysis system.

Figure 5 is a schematic representation of the set-up of the inventive arrangement. Four LEDs 35.1-35.4 are provided for illuminating the sensor element at different wavelengths.

For instance, they work at wavelengths of 504, 606, 645 and 725 nm with a bandwidth of about 15-25 nm each. Their function is controlled by light controller 46.3 integrated in the central analysis device 46. The light scattered by the sensor element is detected by sample detector 29 connected to an analysis unit 46.2 of the central analysis device 46. The intensity of light scattered by the inside of the housing 2 of the device is measured by reference detector 41 which is connected as well to the analysis unit 46.2.

Usually the sample is illuminated subsequently by single light sources, controlled by the light controller 46.3, such that the intensity of scattered light may be measured individually at different wavelengths. For example, the different light sources may be continuously switched through at a rate that allows for reliable measurements and that allows for resolving periodic changes if desired. However, in certain cases, it may be desirable to use two or more light sources simultaneously.

If the remaining ambient light entering into the housing exceeds a certain maximum it may interfere with the illuminating light and increase the noise of the measurements. In such cases the illuminating light may be pulsed or frequency modulated, controlled by light controller 46.3. This allows for systematically eliminating the effects due to ambient light.

By correlating the measurements of the sample detector 29 with the measurements obtained from reference detector 41 in the analysis unit 46.2 certain effects may be systematically taken into account, thereby substantially increasing the quality of the resulting data. Namely effects due to manufacturing tolerances, wear or contamination of the light sources or due to systematic fluctuations of the control of the light sources may be substantially eliminated.

The improved resulting data is transmitted to the control unit 46.1 which controls the light controller 46.3 such that the measured data may be correlated with the actual setup of the light sources 35. The control unit 46.1 is further capable of integrating measured data and of performing further measurement cycles if certain criteria of quality are not yet fulfilled. After a final result is obtained it is transmitted to an interface 46.4 which adapts the signal to the standard defined in the analysis system the modular device is used in. As well, the control unit 46.1 is provided with commands of the analysis system through interface 46.4.

Figure 6 is a cross-sectional view of a sensor element 21 used in the inventive arrangement. It is of a cylindric form and comprises three layers, a carrier element 21.1, a sensor layer 21.2 and a membrane 21.3.

The carrier element 21.1 is made of PET and has a thickness of about 1 mm. It is opaque for UV radiation such that the sensor layer 21.2 is protected from bleaching. However, the transmission of visible light used for the colorimetric measurements is nearly unhindered. The main function of the carrier element 21.1 is providing mechanical stability to the sensor element.

The sensor layer 21.2 is applied on the carrier element 21.1. It comprises one or several indicating substances chosen according to the substances to be determined. Its thickness amounts to about 5 µm and is chosen according to the basic absorption desired.

Adjacent to the sensor layer 21.2 a membrane 21.3 with a thickness of about 100 µm is arranged. It consists of PTFE (Teflon). Only volatile substances may pass this membrane 21.3 and reach the sensor layer 21.2. Due to the white colour of the PTFE membrane illuminating light that has passed the sensor layer unabsorbed is reflected and may still be absorbed by the indicating substance on its way back. Thereby, the effective illumination intensity is enhanced.

Typical examples for substances that may be determined by using such a sensor element comprise e. g. methanol, acetic acid or ammonia. Depending on the indicating substances used, the sensor layer 21.2 may experience a colour change when the sensor element 21 is first contacted by water or an aqueous solution. Therefore, such sensor layers have to be conditioned prior to actual use by exposing the sensor element 21 to water.

Certain effects affecting the measurements may occur during the use of the sensor layer 21.2, namely a change of the reflectivity of the membrane leading to a smaller effective illumination intensity; "poisoning" of the sensor layer by certain substances such that its sensitivity is changed; washing out of the indicating substance, ageing, hysteresis effects and further drift effects. Most of these effects may be compensated for by periodically performing reference measurements. A 0 % reference is achieved if a measurement is performed on the uncharged sensor element, the sensitivity of the device is obtained by measuring on the sensor element charged by some reference fluid. The 0 % reference as well as the measured sensitivity are taken into account during analysis of the actual measurements.

Typically, the uncharged sensor layer will show a reflectivity of about 2 - 15 %. If usual concentrations of substances of the order of 0.01 - 20 Vol.% are measured a maximum change of reflectivity of 2 - 5 % is expected. In order to obtain accurate measurements the resolution of the sample detector should be better than about 0.01 %.

In actual use a multitude of different sensor elements comprising different indicating substances will be available. Usually, it will be preferable to provide a certain number of different modular devices having different combinations of light sources. Each sensor element will work with a certain type or group of modular devices. In order to facilitate the assembly of the analysis system, the housings 2 containing the light sources as well as the cells 4 containing the sensor elements may be marked. A colour code may indicate compatibility or non-compatibility between sensor element or LED. Alternatively, a mechanical coding may even avoid the assembly of a housing 2 with a cell 4 where the sensor element does not match the light sources (key-lock mechanism).

Furthermore, the cells 4 furnished by a certain type of sensor element 21 may be mechanically, optically or electronically marked such that a respective reader disposed in the housing 2 and contacting the cell 4 may recognise the type of sensor element used and transmit this information to a control unit.

In summary, it is to be noted that the invention creates a device for continuous determination of a substance which allows for easily interchanging the modular sensor element and which provides an optical connection between the sensor element and the detector which is steady and allows for high quality measurements.

## Claims

1. An arrangement for continuous determination of a substance comprising a chemically reacting sensor element (21) arranged in or adjacent to a limiting wall of a volume (22) containing the substance, where
a) in a housing (2) of a modular device (1), optical elements to read the sensor element (21) are arranged, comprising at least one light source (35) illuminating the sensor element (21) and at least one sample detector (29) detecting the light scattered by the sensor element (21);
b) a front side of the housing (2) comprises a coupling for the sensor element (21), so that the sensor element (21) may be interchangeably and modularly coupled to the front side of the housing (2);
**characterized in that**
c) a glass body (24) is arranged adjacent to the coupling for direct contact with the sensor element (21) and **in that**
d) separate conduits (34, 31) for the illuminating and for the scattered light are arranged rearward of the glass body (24).

2. The arrangement according to claim 1, **characterized in that** the optical elements are placed in a scattering light detection arrangement.

3. The arrangement according to claim 1 or 2, **characterized in that** the conduit (34) for the illuminating light is inclined with respect to a main surface of the sensor element (21 ).

4. The arrangement according to one of claims 1 to 3, **characterized in that** the glass body (24) is movably fitted to the housing (2) and **in that** a spring (32) exerts pressure onto the glass body (24) such that it is pressed against the sensor element (21).

5. The arrangement according to one of claims 1 to 4, **characterized in that** the at least one sample detector (29), the at least one light source (35) and at least one reference detector (41) are arranged in a cavity (39) of the housing (2) in such a way that a first portion of the light radiated by the light source (35) into a predetermined half-space reaches the reference detector (41) without optics, particularly by being scattered at a wall (42) of the cavity (39), and that a second portion arrives directly at the sensor element (21).

6. The arrangement according to one of claims 1 to 5, **characterized in that** the light source (35) is arranged such that the sensor element (21) is directly illuminated by incident light and that an optic (32) is arranged in front of the sample detector (29).

7. The arrangement according to one of claims 1 to 6, **characterized in that** the sensor element (21) comprises a transparent carrier element (21.1) having a sensor layer (21.2).

8. The arrangement according to claim 7, **characterized in that** a membrane (21.3) is separating the sensor layer (21.2) from the substance to be determined.

9. The arrangement according to one of claims 1 to 8, **characterized in that** the optical elements comprise a plurality of narrow-band light sources (35.1-35.4).

10. The arrangement according to one of claims 1 to 9, **characterized in that** the sensor element (21) is coupled to the housing (2) by a mechanical coupling ring (5) having an axis parallel to a principal axis of the sample detector (29).

11. A modular device, in particular for an arrangement according to one of claims 1-10, for continuous determination of a substance, comprising
a) on a front side of a housing (2) a contact area for a sensor element (21);
b) in the housing (2) optical elements comprising at least one light source (35) and at least one sample detector (29);
**characterized in that**
c) the contact area is constituted by a front surface of a glass body (24) and **in that**
d) separate conduits (34, 31) are arranged rearward of the glass body (24) for guiding illuminating light from the light source to the glass body (24) and for guiding light scattered by the sensor element (21) from the glass body to the sample detector (29).
